# EUROPEAN PATENT SPECIFICATION

(11) **EP 0 324 624 B1**
(45) Date of publication and mention of the grant of the patent: **08.09.1993**
(21) Application number: 89300274.1
(22) Date of filing: 12.01.1989
(51) Int. Cl.: G12B 5/00

(54) **Mounting assembly**
Montagegerät
Ensemble de montage

(30) Priority: 14.01.1988 GB 8800778
(43) Date of publication of application: 19.07.1989
(73) Proprietor: BRITISH AEROSPACE PUBLIC LIMITED COMPANY, Farnborough, Hants. GU14 6YU (GB)
(72) Inventor: Williams Jeffrey, Six Hills Way,Stevenage,Herts SG1 2DA (GB)
(74) Representative: Newell, William Joseph

(56) References cited:
- GB-A- 1 276 816
- US-A- 2 726 834

## Description

This invention relates to a mounting assembly for mounting equipment and for allowing limited adjustment of the angular orientation of the equipment.

Such assemblies are often used to mount equipment which has an axis which must be pointed in a particular direction, for example an aiming unit or other optical equipment such as cameras, telescopes etc.

In one particular circumstance, the assembly is required to mount optical or other equipment on a vehicle and to allow adjustment of the orientation of the equipment relative to the vehicle to compensate for the particular orientation of the vehicle relative to a horizontal reference. In such circumstances the vehicle may be subject to shock loads or vibrations of significant magnitude and it is important that the assembly provides a secure and stable locking action to ensure that the equipment is not moved out of alignment due to the shock loads or vibrations experienced by the vehicle.

In the past it has been proposed to use an adjustable gimbal assembly or a ball and socket assembly. A major difficulty with the ball and socket assembly is that it requires relatively heavy components and precise machining which adds to the production costs. Furthermore, both a ball and socket assembly and a gimbal assembly are inherently unstable when the clamping or locking mechanism has been released. An aiming unit may weight several tens of kilogrammes and so when the gimbal or ball and socket assembly is unrestrained during adjustment, it may flop to one side and crash against an end stop damaging the aiming unit. Also it is difficult to provide the precise movements necessary accurately to adjust the attitude of the equipment because these mounts are inherently unstable. In addition, unless components of high mass are used, the designs of the gimbal and ball and socket assemblies may not provide sufficient structural rigidity to prevent the assembly from moving out of alignment when it is subjected to vibration or shock loads.

A further disadvantage of the existing gimbal and ball and socket assemblies is that locking of the arrangement usually requires the use of two separate locking arrangements (one for each axis of movement) and this can be a severe problem when the assemblies are used to mount equipment such as an aiming unit where the speed of deployment, i.e. orienting and locking the assembly, is of utmost importance.

US-A-2726834 describes a levelling assembly comprising a base, a first wedge member rotatably carried by the base and a second wedge member rotatably carried by the first wedge member. The assembly has two separate locking rings each of which need to be locked to lock the assembly in the required orientation.

According to this invention, there is provided a mounting assembly for mounting equipment for allowing limited adjustment of the angular orientation of the equipment, said apparatus including a base portion, an intermediate portion mounted for rotation relative to said base portion about a first axis, a support portion for supporting said equipment in use and mounted for rotation relative to said intermediate portion about a second axis non-parallel with said first axis, and locking means operable to effect locking between said base portion and said intermediate portion concurrently with locking between said intermediate portion and said support portion.

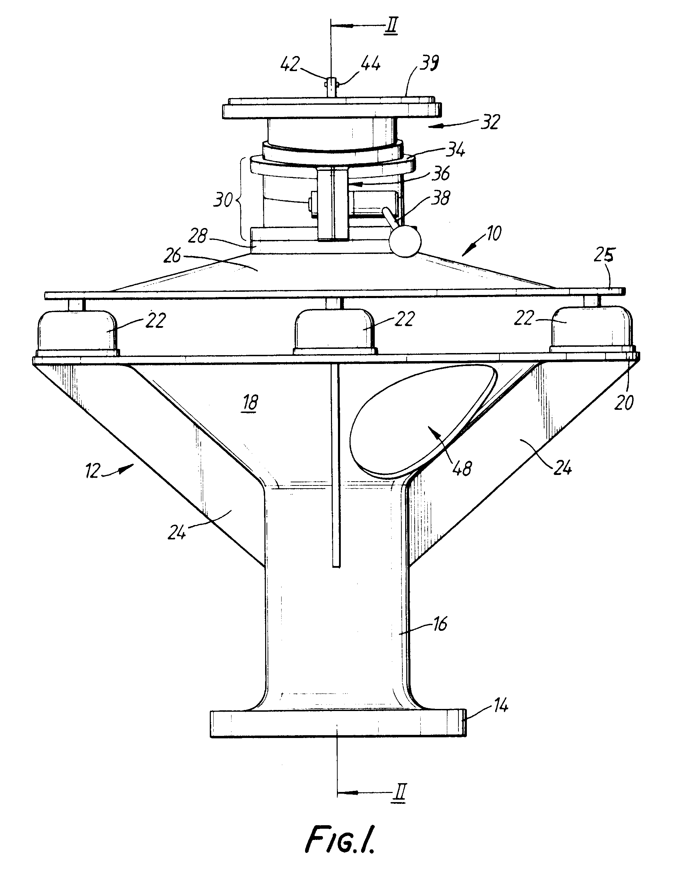

The invention will now be described by way of non-limiting example, reference being made to the accompanying drawings, in which:-
Figure 1 is a front elevation view of a mounting assembly in accordance with this invention, and
Figure 2 is a section view on lines II-II of the assembly of Figure 1, with an aiming unit shown in dotted lines.

The mounting assembly illustrated in the Figures is intended for use as an adaptor for mounting an aiming unit on a vehicle and allowing the orientation of the aiming unit to be adjusted with respect to the vehicle so that the aiming unit can be disposed with its optical axis in a horizontal plan irrespective of the attitude of the vehicle within a design limit. The assembly illustrated is capable of compensating any attitude of the vehicle within a conical locus of half angle 15°. The aiming unit includes internal means for adjusting its azimuth and elevation relative to the horizontal. The assembly illustrated is intended only to compensate for the attitude of the vehicle with respect to the horizontal.

The assembly comprises a base including cast upper and lower parts 10, 12 respectively. The lower part has a lower circular flange 14 for attachment to the vehicle, a tubular portion 16 and a frustoconical portion 18 terminating in an upper flange 20 which supports four shock-absorbing dampers 22. Four strengthening ribs 24 are provided one adjacent each damper 22.

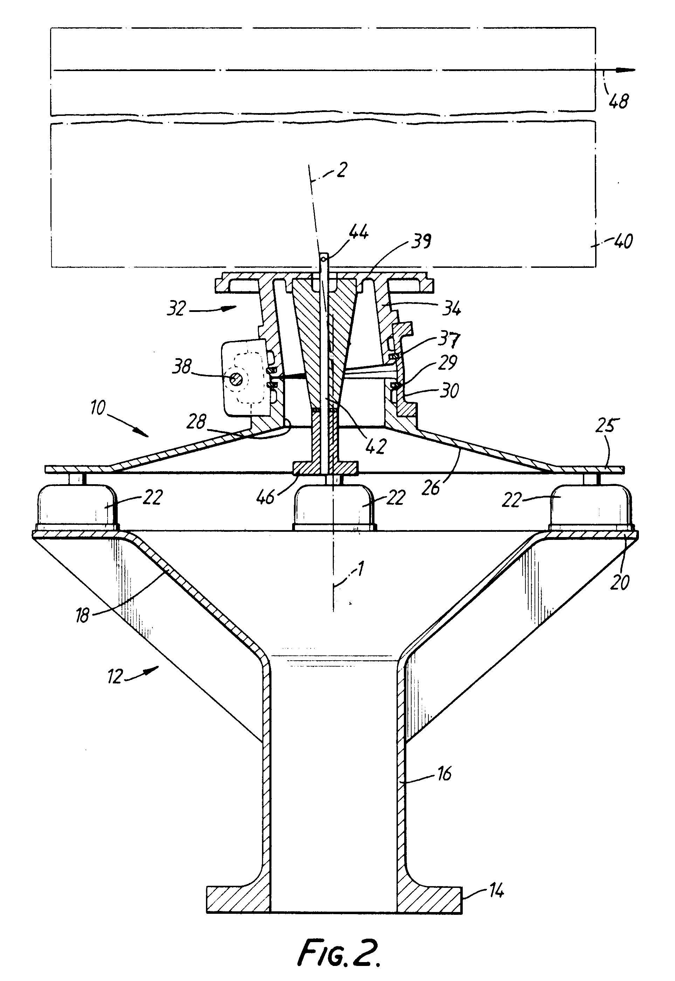

The upper part 12 comprises a lower flange 25 which is connected to the four dampers 22, a flattened frustoconical portion 26 and a cylindrical hub 28. The cylindrical hub 28 is provided with bearing surfaces which rotatably support a cast cranked collar 30 for movement about a first, generally vertical axis 1 (see Figure 2). The collar 30 is restrained against axial movement by means of a ring 29 associated with the hub 28 and which engages an annular groove in the collar 30. The collar is split at 36 and a clamp device 38 is operable to clamp the adjacent parts of the collar together. The collar is dimensioned with respect to the hub 28 such that the collar 30 is free to turn relative to the hub 28 when the clamp device 38 is released, but is locked against rotational movement when the clamp device 38 is operated.

The upper end of the collar 30 is of similar construction as the lower portion, and is cranked in accordance with the range of attitudes of the vehicle that the assembly is to compensate. The collar in this example is cranked through 7.5°. The upper end of the collar rotatably carries a support platform 32 for movement about a second axis 2 which intersects said first axis at 7.5°. The lower end 34 of the support platform is cylindrical and defines bearing surfaces which engage similar surfaces on the inside of the collar 30. A ring 37 associated with the lower end 34 restrains the support platform 32 against axial movement. The support platform 32 defines at its upper end a planar support surface 39 which in this particular example intersects the second axis 2 at 97.5°. Operation of the clamp device 38 locks the collar 30 and the support platform 32 against movement.

A ¼ turn fastener arrangement is provided for allowing quick and easy attachment and removal of an aiming unit 40 from the support surface. The arrangement comprises a stem 42 which carries at its upper end a lateral pin 44 which extends to either side of the stem 42. The stem 42 passes through the upper portion of the support platform and carries a handle 46 at its lower end. The stem 42 is rotatably supported, and the handle 46 is accessible through a port 48 provided in the frustoconical portion 18 of the lower part 10 of the base. The aiming unit is attached to the support platform by placing it on the support platform with the complementary part of the ¼ turn fastener adjacent the exposed part of the stem 42 and locking the unit in position by turning the handle 46 through 90°. The line of sight of the aiming unit 40 is shown at 48, parallel to the base of the unit and thus at an angle of 97.5° to the second axis 2.

It will be understood that, in the present example, where the first and second axes are at 7.5° and the support surface 39 of support platform 32 is displaced 7.5° from a radial plane with respect to the second axis, any compound angle within a cone of half angle 15° may be compensated by appropriate rotation about the first and second axes. Clearly the range of angles which is accommodated can be increased or decreased by modifying the collar 32 to change the angle between the first and second axes and to modify the construction of the support platform 32 so that the angle between the plane of the support surface 39 and the second axis 2 is changed.

An advantage of the example of mounting assembly illustrated is that it is inherently stable even when the clamp device 38 is released and rotations about said first and second axes are possible. This makes fine adjustment of the orientation of the aiming unit much easier compared to arrangements which use gimbals or ball and socket joints. Also the high area of planar contact between the movable components means that the mounting assembly has a high rigidity when clamped as compared to the gimbal and ball and socket assemblies referred to above, so that the illustrated mounting assembly may maintain alignment even in the face of high vibration of shock loads.

Furthermore, the use of a generally cylindrical collar member means that, even though the support platform 32 is movable about two axes, the equipment mounted on the support platform may be releasably secured thereto by a locking arrangement which engages a region of the equipment adjacent the pivotal centre of the amounting assembly and which extends generally coaxially with respect to the collar to terminate clear of the pivotal region. This feature means that the equipment can be securely attached to the support platform and that engagement can be effected by hand away from the pivotal region of the assembly.

Finally, the combination of the high rigidity mounting assembly together with the vibration dampers means that the assembly is particularly well suited for vehicle mounting where the vehicle may sustain high shock or vibration loads during use.

## Claims

1. A mounting assembly for mounting equipment (40) and for allowing limited adjustment of the angular orientation of the equipment, said apparatus including a base portion (26), an intermediate portion (30) mounted for rotation relative to said base portion (26) about a first axis (1), and a support portion (32) for supporting said equipment in use and mounted for rotation relative to said intermediate portion (30) about a second axis (2) non-parallel with said first axis (1), characterised in that said assembly further includes locking means (38) operable to effect locking between said base portion (26) and said intermediate portion (30) concurrently with locking between said intermediate portion (30) and said supporting portion (32).

2. A mounting assembly according to any one of the preceding claims, wherein said intermediate portion (30) includes spaced end regions each including a bore respectively defining said first (1) and second (2) axes.

3. A mounting assembly according to Claim 2, wherein said intermediate portion (30) comprises a collar member cranked to define said first (1) and second (2) axes.

4. A mounting assembly according to Claim 3, wherein said collar member is split longitudinally and said locking means (38) includes clamp means operable to change the dimensions of said end regions, thereby to prevent rotation of said support portion (32) and said base portion (26) relative to said intermediate portion (30).

5. A mounting assembly according to Claim 4, wherein said clamp means is operable to reduce the effective internal diameters of said end regions.

6. A mounting assembly according to any one of the preceding claims, wherein said support portion (32) includes a generally planar support region (39) which intersects said second axis (2) at a generally acute angle.

7. A mounting assembly according to any one of the preceding claims, wherein said assembly includes means (42,44,46) arranged in use releasably to engage equipment (40) to be supported on said support portion (32).

8. A mounting assembly according to Claim 7, wherein said engagement means (42,44,46) includes an elongate shaft means (42) which extends generally longitudinally through said sleeve portion (30).

9. A mounting assembly according to any preceding claim, wherein said base portion (26) is connected to a structural support member (24) by means of vibration damping means (22).

10. A mounting assembly according to Claim 9, wherein said base portion (26) and said structural support member each include opposed frustoconical portions with the vibration damping means disposed between the basal regions of said frustoconical portions.

## Patentansprüche

1. Montagegerät zum Montieren einer Apparatur (40) mit begrenzter Einstellmöglichkeit der Winkellage der Apparatur, wobei das Gerät einen Basisteil (26), einen Mittelteil (30), der drehbar auf dem Basisteil (26) um eine erste Achse (1) gelagert ist, und einen Träger (32) aufweist, um die Apparatur im Betrieb abzustützen und drehbar relativ zu dem Mittelteil (30) um eine zweite Achse (2), die nicht parallel zur ersten Achse (1) verläuft, zu lagern,
dadurch gekennzeichnet, daß das Gerät außerdem eine Verriegelungseinrichtung (38) aufweist, die eine Verriegelung zwischen dem Basisteil (26) und dem Zwischenteil (30) gleichzeitig mit einer Verriegelung zwischen dem Zwischenteil (30) und dem Träger (32) bewirkt.

2. Montagegerät nach Anspruch 1, bei welchem der Zwischenteil (30) im Abstand zueinander liegende Endbereiche besitzt, welche eine Bohrung aufweisen, die die erste Achse (1) und die zweite Achse (2) definiert.

3. Montagegerät nach Anspruch 2, bei welchem der Zwischenteil (30) ein Ringlager aufweist, welches gekröpft ist, um die erste (1) und die zweite (2) Achse zu bilden.

4. Montagegerät nach Anspruch 3, bei welchem das Ringlager in Längsrichtung aufgeteilt ist und die Verriegelungseinrichtung (38) eine Klemme aufweist, die die Abmessungen der Endbereiche ändert, wodurch eine Drehung des Trägers (32) und des Basisteils (26) relativ zu dem mittleren Teil (30) verhindert wird.

5. Montagegerät nach Anspruch 4, bei welchem die Klemmeinrichtung die wirksamen Innendurchmesser der Endbereiche vermindert.

6. Montagegerät nach einem der vorhergehenden Ansprüche, bei welchem der Träger (32) einen allgemein ebenen Trägerbereich (39) aufweist, der die zweite Achse (2) unter einem spitzen Winkel schneidet.

7. Montagegerät nach einem der vorhergehenden Ansprüche, bei welchem das Gerät Mittel (42, 44, 46) aufweist, die im Betrieb lösbar an der Apparatur (40) angreifen, die von dem Träger (32) abgestützt wird.

8. Montagegerät nach Anspruch 7, bei welchem die Eingriffsmittel (42, 44, 46) eine langgestreckte Stange (42) aufweisen, die sich in Längsrichtung durch den Hülsenabschnitt (30) erstreckt.

9. Montagegerät nach einem der vorhergehenden Ansprüche, bei welchem der Basisteil (26) mit einem Träger (24) über Vibrationsdämpfer (22) verbunden ist.

10. Montagegerät nach Anspruch 9, bei welchem der Basisteil (26) und der Träger jeweils entgegengesetzt gerichtete kegelstumpfförmige Abschnitte aufweisen, wobei die Vibrationsdämpfungseinrichtung zwischen den Basisbereichen der kegelstumpfförmigen Abschnitte angeordnet ist.

## Revendications

1. Ensemble de montage d'un appareillage (40) destiné à permettre un ajustement limité de l'orientation angulaire de l'appareillage, l'appareil comprenant une partie de base (26), et une partie intermédiaire (30) montée afin qu'elle tourne par rapport à la partie de base (26) autour d'un premier axe (1), et une partie de support (32) destinée à supporter l'appareillage pendant l'utilisation et montée afin qu'elle tourne par rapport à la partie intermédiaire (30) autour d'un second axe (2) qui n'est pas parallèle au premier axe (1), caractérisé en ce que l'ensemble comporte en outre un dispositif de blocage (38) destiné à assurer le blocage entre la partie de base (26) et la partie intermédiaire (30) en même temps que le blocage de la partie intermédiaire (30) et de la partie de support (32).

2. Ensemble de montage selon l'une quelconque des revendications précédentes, dans lequel la partie intermédiaire (30) comporte des régions distantes d'extrémité ayant chacune un trou délimitant respectivement le premier axe (1) et le second axe (2).

3. Ensemble de montage selon la revendication 2, dans lequel la partie intermédiaire (30) comporte un collier qui est courbé afin qu'il délimite le premier axe (1) et le second axe (2).

4. Ensemble de montage selon la revendication 3, dans lequel le collier est fendu longitudinalement et le dispositif de blocage (38) comporte un dispositif de serrage destiné à changer les dimensions des régions d'extrémité et à empêcher ainsi la rotation de la partie de support (32) et de la partie de base (26) par rapport à la partie intermédiaire (30).

5. Ensemble de montage selon la revendication 4, dans lequel le dispositif de serrage est destiné à réduire le diamètre interne efficace des régions d'extrémité.

6. Ensemble de montage selon l'une quelconque des revendications précédentes, dans lequel la partie de support (32) comprend une région (39) de support qui est plane de façon générale et qui recoupe le second axe (2) suivant un angle aigu de façon générale.

7. Ensemble de montage selon l'une quelconque des revendications précédentes, dans lequel l'ensemble comporte un dispositif (42, 44, 46) disposé afin que, pendant l'utilisation, il coopère temporairement avec l'appareillage (40) qui doit être supporté sur la partie de support (32).

8. Ensemble de montage selon la revendication 7, dans lequel le dispositif de coopération (42, 44, 46) comprend un dispositif (42) à arbre allongé placé longitudinalement de façon générale dans la partie de manchon (30).

9. Ensemble de montage selon l'une quelconque des revendications précédentes, dans lequel la partie de base (26) est raccordée à un organe mécanique (24) de support par l'intermédiaire d'un dispositif (22) d'amortissement de vibrations.

10. Ensemble de montage selon la revendication 9, dans lequel la partie de base (26) et l'organe mécanique de support comprennent chacun des parties tronconiques opposées, le dispositif d'amortissement des vibrations étant disposé entre les régions de base des parties tronconiques.
